# EUROPEAN PATENT SPECIFICATION

(11) **EP 0 449 657 B1**
(45) Date of publication and mention of the grant of the patent: **06.12.1995**
(21) Application number: 91302824.7
(22) Date of filing: 28.03.1991
(51) Int. Cl.: G03B 17/56, H04N 5/225

(54) **Video camera**
Videokamera
Caméra-vidéo

(30) Priority: 29.03.1990 JP 82242/90
(43) Date of publication of application: 02.10.1991
(73) Proprietor: SONY CORPORATION, Tokyo 141 (JP)
(72) Inventor: Wada, Koichi, c/o Patents Division, Shinagawa-ku Tokyo 141 (JP); Kamaya, Naoki, c/o Patents Division, Shinagawa-ku Tokyo 141 (JP)
(74) Representative: Purvis, William Michael Cameron

(56) References cited:
- EP-A- 0 248 676
- GB-A- 2 129 950
- US-A- 4 221 477
- US-A- 4 255 036

## Description

The invention relates generally to a video camera.

Hand held cameras of the type wherein images which have passed through an optical lens system are converted into electrical video signals by way of a CCD and recorded on magnetic tape in a cassette which is operatively disposed within the camera body, are now in widespread use.

However, when such devices are not in use and are being transported from one place to another, a carrying handle is frequently required. With current ultra-small compact hand-held 8 mm video cameras, in order to achieve the light weight and compactness which is inherently required, the camera construction and design becomes such that it is very difficult to provide connection sites of adequate size and robustness to permit a carrying handle to be conveniently connected thereto.

According to the invention there is provided a video camera having a camera casing with a battery connection site thereon; a carrying handle having:
means thereon defining a connection site whereby the carrying handle can be selectively connected to the battery connection site on the camera casing; and
means included in the carrying handle by way of which electrical power can be supplied to the camera.

Preferably the battery mounting site is on a rear portion of the camera casing, a threaded bore whereby a tripod can be connected to the camera casing is provided at a lower portion of the camera casing; and the carrying handle includes a portion having a battery mounting site; and
a portion which can be connected to the camera by way of the threaded bore.

Advantageously the carrying handle includes a grip portion with at least one accessory hot shoe provided thereon.

Preferably the carrying handle is so constructed and arranged that it can be interposed between the camera battery mounting site and a battery, so that electrical power from the battery can be supplied through the carrying handle to the camera, and so that a light can be mounted thereon, in a manner such that electrical power can be supplied to the light from the battery.

Such a carrying handle for a video camera can be compact and can avoid the need for the camera to be provided with carrying handle connections per se. It can be operatively connected between a battery mounting site on the camera and a battery which would normally be directly connected to the camera by way of the mounting site.

The carrying handle can be equipped with one or more hot shoes with the handle providing an electrical connection between the battery, the camera and the or each hot shoe.

The invention is diagrammatically illustrated by way of example in the accompanying drawings, in which:

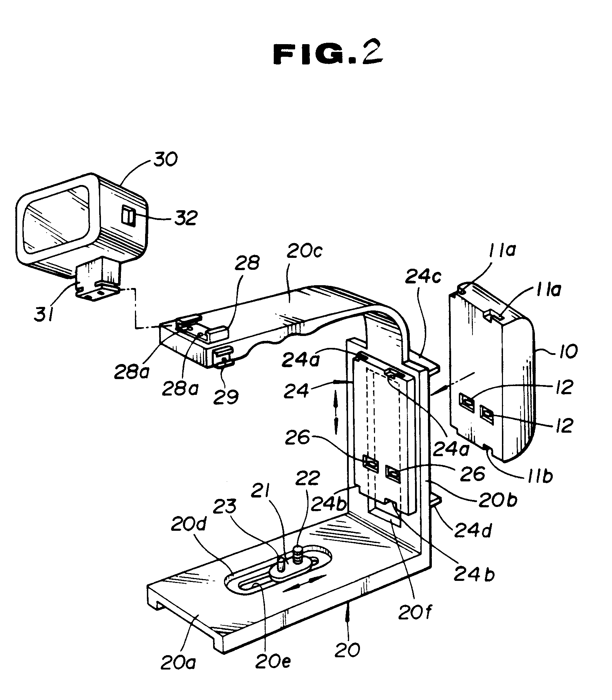

Figure 2 is a perspective view showing the carrying handle and illustrating the manner in which a battery pack and a lamp accessory can be connected thereto;
Figure 1 is a perspective view showing a video camera according to the invention including a carrying handle which is also used to support a lamp;
Figure 3 is a side elevation of the arrangement shown in Figure 1;
Figure 4 is a perspective view from the rear of the video camera of Figure 1 and the battery pack arrangement;
Figure 5 is a perspective view showing the camera and battery pack of Figure 4 in a fully assembled condition; and
Figure 6 is a schematic diagram showing the manner in which in a video camera according to the invention, a carrying handle can establish electrical connection between a battery, the camera and hot shoes to which a light or like camera accessory can be connected.

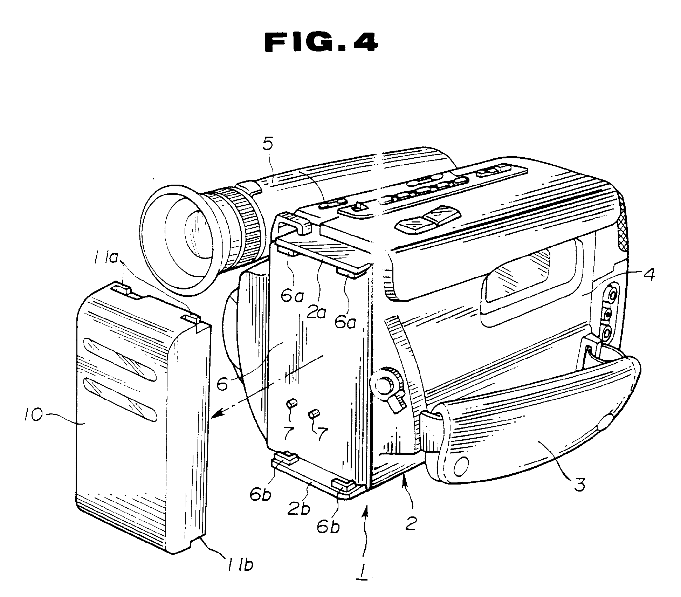

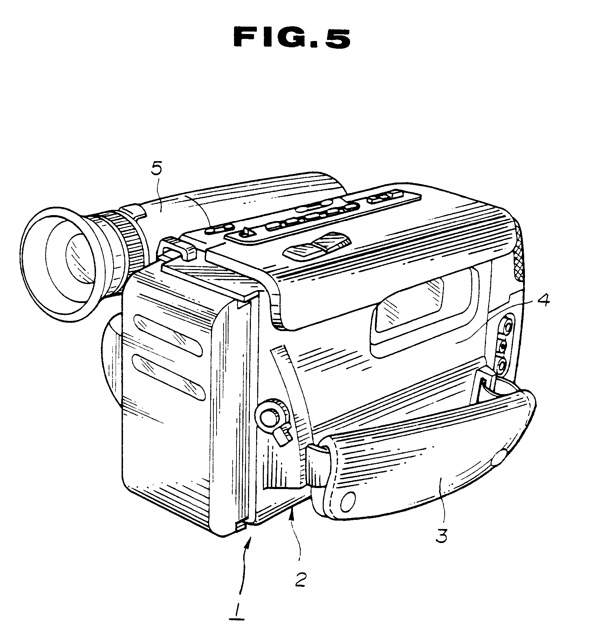

Referring to the drawings, a carrying handle 20 is shown applied or to be applied to a video camera 1 of a so called "8-milli" type having a casing 2 which has a grip 3 provided on the lower right hand side thereof in the manner shown in Figures 4 and 5. The grip 3 is located below a VTR deck section 4 into which a non-illustrated tape cassette can be loaded.

A view finder 5 is arranged on the left hand side of the casing 2 while a battery mounting site 6 is provided on the rear face of the casing. As best appreciated from Figure 4, the mounting site 6 includes essentially L shaped projections 6a, 6a and 6b, 6b which are formed integrally in the inboard faces of mounting flanges 2a and 2b which extend from upper and lower edges of the mounting site 6. These projections are arranged interlockingly to cooperate with recesses 11a, 11a and 11b, 11b formed in the upper and lower corners of a battery pack 10. The battery mounting site 6 further includes positive and negative contacts 7, 7 which are engageable with spring plate type contacts 12, 12 provided on a front face of the battery pack 10 (see Figure 2), and through which electrical current can be supplied to the circuitry/motors included in the camera body 2 from the battery pack 10.

It should be noted that while the battery pack 10 is illustrated as being of the pack type, there is no limitation to this type of power source and other types such as a case type arrangement into which cell type batteries can be loaded, can be used if desired.

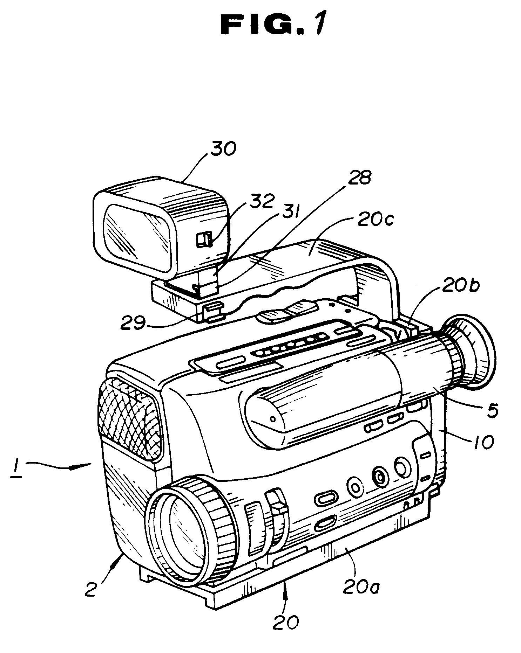

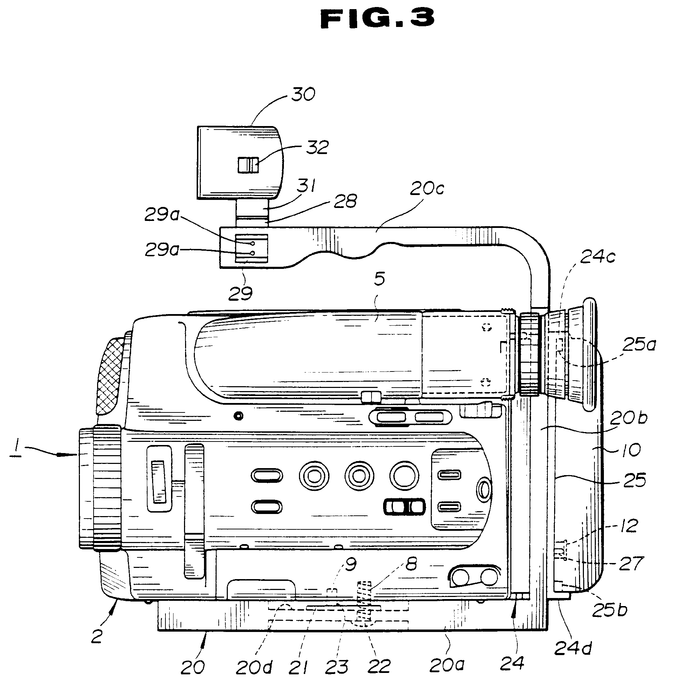

The carrying handle 20, which is shown in Figures 1 to 3, is generally C-shaped and comprises a horizontal base portion 20a, a vertical portion 20b and a grip portion 20c. The base portion 20a is formed with a centrally located recess 20d in which a slot 20e is defined. A slide plate 21 is disposed in the recess 20d and can be reciprocally moved back and forth therealong. A screw 22 of the kind provided on a camera mounting tripod extends through the slide plate 21 and can be threadedly received in a threaded tripod connection bore 8 in the casing 2. The slide plate 21 is further formed with a pin 23 which extends up from the upper surface of the plate and can be received in a positioning bore 9 formed in the underside of the casing 2 proximate the threaded bore 8.

The vertical portion 20b is formed with an elongate opening 20f in which a battery connection plate 24 is reciprocally received. As indicated in Figure 2, the connection plate 24 is arranged so that it can be moved up and down in the slot 20f. The front face of the connection plate 24 is formed with L-shaped recesses 24a, 24a and 24b, 24b which can engagingly receive the projections 6a, 6a and 6b, 6b formed on the mounting flanges 2a, 2b of the casing 2. The front face of the vertical portion 20b, is further formed with spring plate type contacts 26, 26 which are engageable with the pin type contacts 7, 7 which extend from the battery mounting site 6 formed on the rear of the casing 2.

The rear face of the connection plate 24 is formed with a battery mounting site 25 which is constructed and arranged in similar manner to the battery mounting site 6 formed on the camera body 2. Thus, the mounting plate 24 includes mounting flanges 24c, 24c with L-shaped projections 25a, 25a and 25b, 25b, and pin type contacts 27, 27.

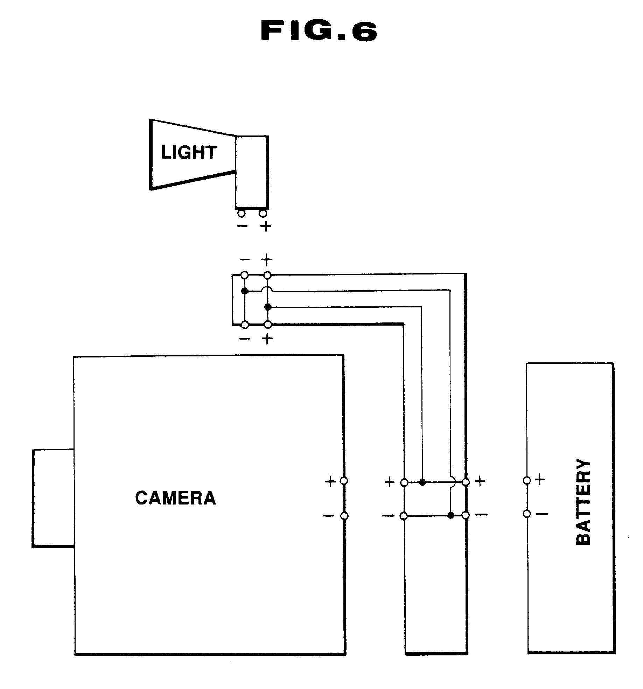

When a battery pack 10 is mounted on the mounting site 25, the recesses 25a, 25a and 25b, 25b engage in the recesses 11a, 11a and 11b, 11b in similar manner to the manner in which the battery pack 10 can be mounted on the camera casing 2. To establish electrical connection between the battery and the camera, the pin type contacts 27, 27 formed on the mounting site 25 and which engage with the spring plate type contacts 12, 12 of the battery, are electrically connected with the spring plate type contacts 26, 26 formed on the connection plate 24. The pin type contacts 27, 27 are also electrically connected by leads (Not shown) to contacts 28a, 28a and 29a, 29a of accessory mounting hot shoes 28, 29 provided at the forward end of the grip portion 20c. Thus electrical power from the battery pack 10 can be supplied to both the camera and the accessory hot shoes 28, 29 (see Figure 6).

The accessory hot shoe 28 is illustrated as being used to mount a video light 30. The accessory hot shoe 29 could be used to mount a microphone or the like. A switch 32 provided on the lamp body enables the light 30 to be switched on and off as desired.

With the above described embodiment, when it is desired to use the carrying handle 20, first a battery pack 10, if already fitted, is detached from the mounting site 6 on the camera casing 2 in the manner indicated in Figure 4. The carrying handle 20 is then placed in position on the camera with the connection plate 24 in a raised position and the projections 6a, 6a and 6b, 6b are engaged in the recesses 24a, 24a and 24b, 24b with a suitable clearance provided between the bottom of the camera 1 and the horizontal base portion 20a.

Next, the slide plate 21 is moved to a position wherein the guide pin 23 is aligned with the guide bore 9. The handle 20 is then moved upwardly with respect to the camera casing 2 so that the horizontal base portion 20a abuts the underside of the camera casing 2 and the pin 23 enters the bore 9. The screw 22 is then threaded into the bore 8 in a manner which secures the handle 20 and the camera body 2 together. The battery 10 is subsequently mounted on the mounting site 25 in a manner such that the projections 25a, 25a and 25b, 25b are engaged in the recesses 11a, 11a and 11b, 11b formed at the corners of the battery unit 10.

Under these conditions the pin type contacts 27, 27 are in electrical contact with the spring plate type contacts 12, 12 of the battery, and the pin type contacts 7, 7 on the mounting site 6 are in electrical contact with the spring plate type contacts 26, 26 on the mounting plate 24. Accordingly, electrical connections between the battery pack 10 and the accessory shoes 28 and 29, are respectively established.

Thus, the carrying handle 20 can be connected to a video camera of the type wherein a battery pack mounting site is provided at the rear of the camera body 2 without the need for the special provision of carrying handle connections per se.

Further, as the carrying handle is provided with a battery mounting site 25 and a horizontal base portion to be secured to a tripod connection arrangement, it can be connected easily and subsequently used to carry the battery pack 10. In addition, the design can be such that the grip portion 20c of the handle which extends above the camera, does not get in the way during use and additionally serves to mount accessories such as a light or a microphone.

Further, the carrying handle can be connected in a manner such that it compactly fits about the camera whereby it appears to be integral therewith, which does not require special connections to be provided and which does not detract from the design/appearance of the camera.

While the above embodiment has been disclosed in a manner wherein a battery pack 10 is connectable to the battery mounting site 25, it is within the scope of the invention to form a battery pack or case integrally with the carrying handle.

## Claims

1. A video camera (1) having a camera casing (2) with a battery connection site (6) thereon; a carrying handle (20) having:
means (24) thereon defining a connection site whereby the carrying handle (20) can be selectively connected to the battery connection site (6) on the camera casing (2); and
means included in the carrying handle (20) by way of which electrical power can be supplied to the camera.

2. A video camera according to claim 1, wherein the battery mounting site (6) is on a rear portion of the camera casing (2), a threaded bore (8) whereby a tripod can be connected to the camera casing (2) is provided at a lower portion of the camera casing (2); and the carrying handle (20);
includes a portion (20b) having a battery mounting site (25); and
a portion (20a) which can be connected to the camera by way of the threaded bore (8).

3. A video camera according to claim 1 or claim 2, wherein the carrying handle includes a grip portion (20c) with at least one accessory hot shoe (28, 29) provided thereon.

4. A video camera according to any one of claims 1 to 3, wherein the carrying handle (20) is so constructed and arranged that it can be interposed between the camera battery mounting site (6) and a battery (10), so that electrical power from the battery (10) can be supplied through the carrying handle (20) to the camera (1), and so that a light (30) can be mounted thereon, in a manner such that electrical power can be supplied to the light (30) from the battery (10).

5. A video camera according to claim 4, so constructed and arranged that the light (30) can be supported at a position which is one of above and beside the camera (1).

6. A video camera according to claim 4, wherein the carrying handle (20) has a portion (20a) which is connectable to the camera body and includes a second battery mounting site (25).

7. A video camera according to claim 6, wherein the battery mounting site (6) on the camera and the battery mounting site (25) on the carrying handle (20) comprise L-shaped projections (6a, 6b, 25a, 25b).

8. A video camera according to claim 7, wherein the battery mounting site (6) on the camera (1) and the battery mounting site (25) on the carrying handle (20) have rectangular configurations with the L-shaped projections (6a, 6b, 25a, 25b) formed at each of the four corners thereof.

## Patentansprüche

1. Tragegriff (20) für eine Videokamera (1), welche ein Kameragehäuse (2) mit einer Batterieanschlußstelle (6) besitzt, mit:
einer Einrichtung (24), welche eine Anschlußstelle definiert, durch welche der Tragegriff (20) selektiv mit der Batterieanschlußstelle (6) an dem Kameragehäuse (2) verbunden werden kann; und
einer in dem Tragegriff (20) enthaltenen Einrichtung, mittels welcher elektrische Energie an die Kamera angelegt werden kann.

2. Videokamera nach Anspruch 1, bei welcher die Batterieanschlußstelle (6) am hinteren Teil des Kameragehäuses (2) ist, wobei eine Gewindebohrung (8), wodurch ein Dreibeinstativ mit dem Kameragehäuse (2) verbunden werden kann, im unteren Teil des Kameragehäuses (2) vorgesehen ist; und der Tragegriff (20)
ein Teil (20b) mit einer Batterieanschlußstelle (25) enthält; und
ein Teil (20a), welches mit der Kamera mittels der Gewindebohrung (8) verbunden werden kann, enthält.

3. Videokamera nach Anspruch 1 oder 2, bei welcher der Tragegriff ein Griffteil (20c) mit mindestens einem darauf vorgesehenen spannungführenden Steckschuh (28, 29) enthält.

4. Videokamera nach Anspruch 1 bis 3, bei der der Tragegriff (20) so konstruiert und gestaltet ist, daß er zwischen der Kamerabatterieanschlußstelle (6) und einer Batterie (10) eingefügt werden kann, so daß elektrische Energie von der Batterie (10) durch den Tragegriff (20) der Kamera (1) zugeführt werden kann, und so, daß eine Leuchte (30) in einer Weise darauf befestigt werden kann, daß die elektrische Energie der Leuchte (30) von der Batterie (10) zugeführt werden kann.

5. Videokamera nach Anspruch 4, welche derart konstruiert und gestaltet ist, daß die Leuchte (30) in einer Position gehalten werden kann, welche sich oberhalb oder neben der Kamera (1) befindet.

6. Videokamera nach Anspruch 4, bei welcher der Tragegriff (20) ein Teil (20a) besitzt, welches mit dem Kameraboden verbindbar ist und eine zweite Batteriebefestigungsstelle (25) enthält.

7. Videokamera nach Anspruch 6, bei welcher die Batteriebefestigungsstelle (6) an der Kamera und die Batteriebefestigungsstelle (25) an dem Tragegriff (20) L-förmige Erhebungen (6a, 6b, 25a, 25b) aufweisen.

8. Videokamera nach Anspruch 7, bei welcher die Batteriebefestigungsstelle (6) an der Kamera und die Batteriebefestigungsstelle (25) an dem Tragegriff (20) rechteckförmige Anordnungen mit den L-förmige Erhebungen (6a, 6b, 25a, 25b) besitzen, welche an jeder der vier Ecken davon ausgebildet ist.

## Revendications

1. Caméra vidéo (1) ayant un boîtier de caméra (2) avec un emplacement de raccordement de batterie (6); une poignée de transport (20) ayant :
des moyens (24) définissant un emplacement de raccordement de sorte que la poignée de transport (20) peut être reliée de manière sélective à l'emplacement de raccordement de batterie (6) sur le boîtier de caméra (2); et
des moyens inclus dans la poignée de transport (20) au moyen desquels l'énergie électrique peut être fournie à la caméra.

2. Caméra vidéo selon la revendication 1, dans laquelle l'emplacement de montage de batterie (6) est sur une partie arrière du boîtier de caméra (2), un alésage taraudé (6) est prévu dans une partie inférieure du boîtier de caméra (2) de sorte qu'un trépied peut être relié au boîtier de caméra (2); et la poignée de caméra comprend une partie (20b) ayant un emplacement de montage de batterie (25) ; et
une partie (20a) qui peut être reliée à la caméra au moyen de l'alésage taraudé (8).

3. Caméra vidéo selon la revendication 1 ou la revendication 2, dans laquelle la poignée de transport comprend une partie de poignée (20c) avec au moins une griffe porte-accessoires (28, 29) prévue dessus.

4. Caméra vidéo selon l'une quelconque des revendications 1 à 3, dans laquelle la poignée de transport (20) est construite et agencée de telle sorte qu'elle peut être interposée entre l'emplacement de montage de batterie de caméra (6) et une batterie (10), de sorte que l'énergie électrique provenant de la batterie (10) peut être délivrée par l'intermédiaire de la poignée de transport (20) à la caméra (1), et de sorte qu'une lampe (30) peut être montée dessus, d'une manière telle que l'énergie électrique peut être délivrée à la lampe (30) par la batterie (10).

5. Caméra vidéo selon la revendication 4, construite et agencée de telle sorte que la lampe (30) peut être supportée dans une position qui est au-dessus et sur le côté de la caméra (1).

6. Caméra vidéo selon la revendication 4, dans laquelle la poignée de transport (20) possède une partie (20a) qui peut être reliée au boîtier de caméra et comprend un deuxième emplacement de montage de batterie (25).

7. Caméra vidéo selon la revendication 6, dans laquelle l'emplacement de montage de batterie (6) sur la caméra et l'emplacement de montage de batterie (25) sur la poignée de transport (20) comportent des saillies en forme de L (6a, 6b, 25a, 25b).

8. Caméra vidéo selon la revendication 7, dans laquelle l'emplacement de montage de batterie (6) sur la caméra (1) et l'emplacement de montage de batterie (25) sur la poignée de transport (20) présente des configurations rectangulaires avec les saillies en forme de L (6a, 6b, 25a, 25b) formées au niveau de chacun des quatre coins.
